**Europäisches Patentamt**

**European Patent Office**

**Office européen des brevets**

(11) Publication number: **0 174 186**
**B1**

## (12) EUROPEAN PATENT SPECIFICATION

(45) Date of publication of patent specification: **28.02.90**

(21) Application number: **85306254.5**

(22) Date of filing: **04.09.85**

(51) Int. Cl.⁵: **G 01 N 21/47**

(54) **Reflectometer.**

(30) Priority: **04.09.84 US 646405**

(43) Date of publication of application:
**12.03.86 Bulletin 86/11**

(45) Publication of the grant of the patent:
**28.02.90 Bulletin 90/09**

(84) Designated Contracting States:
**BE CH DE FR GB IT LI SE**

(56) References cited:
**EP-A-0 037 761**
**EP-A-0 075 766**
**EP-A-0 117 674**
**DE-A-3 332 986**
**US-A-4 076 421**

(73) Proprietor: **EASTMAN KODAK COMPANY (a New Jersey corporation)**
**343 State Street**
**Rochester New York 14650 (US)**

(72) Inventor: **MacDonald, Stuart Gilmour**
**Kodak Park**
**Rochester New York 14650 (US)**

(74) Representative: **Davis, Ian Ellison et al**
**Kodak Limited Patent Department Headstone Drive**
**Harrow Middlesex HA1 4TY (GB)**

Courier Press, Leamington Spa, England.

## Description

The present invention relates to a reflectometer useful in detecting reflection densities $D_R$ in test elements, and more particularly, to one that uses a pulsed light source and an integrating means.

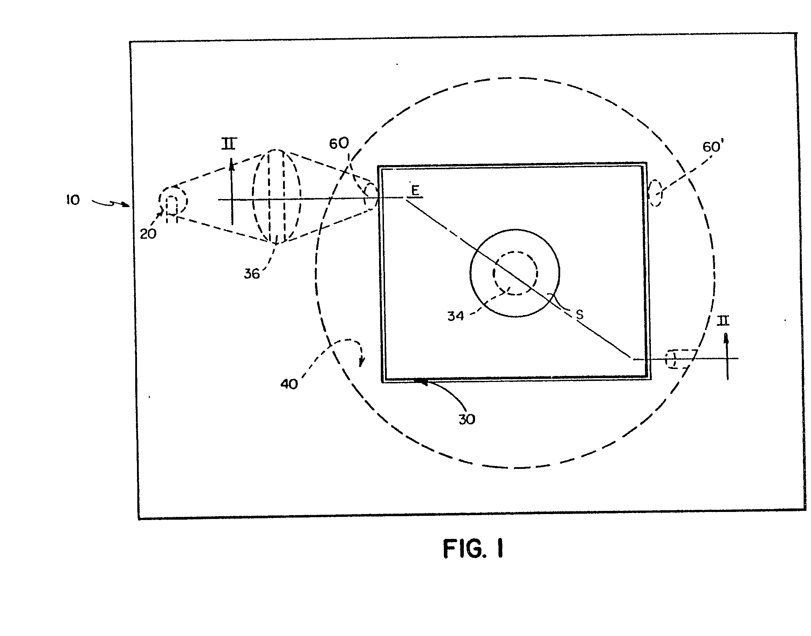

Reflectometers have been constructed with a variety of light sources. Pulsed sources, such as a pulsed xenon source, have the following advantages: a) high ratio of usable light to power and heat generated; and b) a use of power that is limited to the time when a test element is to be read. A pulsed xenon source is particularly useful in illuminating at wavelengths between 300 and 400 nm, such wavelengths being of particular interest for certain test elements. However, such pulsed light sources have the disadvantage of being structured rather than diffuse. That is, the arc itself rather than a general light is imaged. The structure and position of the arc generating the light varies from pulse to pulse as does the color temperature. Therefore, it has been well recognized that reflectometers using such a source require integrating means to convert the structured light into diffuse light. Examples are shown in Fig. 1 of US—A—4076421 and in US—A—4022534 wherein a mirrored surface is used in conjunction with a diffusely transmitting surface. One problem with such prior reflectometers has been that light that is not initially diffusely sent direct to the sample, tends to be lost. For example, the device of US—A—4076421 states such light is either absorbed by the walls of the cavity or reflected out through the detecting aperture, without ever striking the sample (col. 2, lines 36—38). The device of US—A—4022534 directs such light to baffles that absorb the light. Such lost light drastically reduces the efficiency of the reflectometer, necessitating a more powerful light source to make up for the reduction in efficiency. Such increased power requirements in turn have made the use of pulsed light sources less attractive, prior to the present invention.

In accordance with the present invention, there is provided a reflectometer comprising means for supporting a generally planar test element in a predetermined location, said means comprising a transparent member or aperture permitting illumination of such a test element, a light source, integrating means optically disposed between said source and said predetermined location, and detector means for detecting radiation diffusely reflected from a test element supported in said location, said detector means having an axis of detection extending to said predetermined location, said integrating means comprising a diffusely-reflecting surface positioned about said axis so that at least one ray of light reflected from a portion of said surface passes optically unimpeded to the approximate middle of said transparent member or aperture, thereby defining a path of aligned illumination for said surface portion, and mirrored surfaces connected to opposite edges of said diffusely-reflecting surface and configured to reflect back to said diffusely-reflecting surface at least the majority of the non-aligned light that is diffusely reflected from said surface portion.

It is an advantageous feature of the present invention that a reflectometer is provided with means for integrating the light from a light source at levels of increased efficiency, thus permitting the use of a pulsed source.

It is a related advantageous feature of the present invention that such a reflectometer has a high degree of utilization of the light from a pulsed light source.

The present invention will now be described by way of example with reference to the accompanying drawings in which:

Fig. 1 is a plan view of a reflectometer of the present invention;

Fig. 2 is a fragmentary sectional view taken generally through the axis of an integrating cavity of the reflectometer, along the line II—II of Fig. 1;

Fig. 3 is a fragmentary sectional view similar to that of Fig. 2 except that only the left-half portion of the cavity is detailed, to illustrate typical ray traces for one-half of the cavity, demonstrating the increased efficiency of the reflectometer; and

Figs. 4 and 5 are sectional views similar to that of Fig. 3, except that alternative embodiments are illustrated.

The present invention is described in connection with a preferred reflectometer wherein the test element contacts the reflectometer, and with preferred test elements containing a liquid analyte. In addition, it is applicable to any reflectometer wherein an integrating cavity is used, regardless of the form of the test element or whether it is in contact with the reflectometer. The reflectometer of this invention is also useful in measuring reflectivity of objects which do not receive liquids, such as dyed cloth, paper, photographic coatings, and plastic materials.

Preferred test elements are constructed to receive a liquid containing analytes and to produce a change detectable by reflected light. Most preferred are multi-zoned elements having a plurality of reagents and/or functions that are divided among layered zones. Highly preferred are elements in which the zones are separate but contiguous layers, for example, a multi-layered test element as described in US—A—3992158 or in US—A—4258001. The test elements of said patents include an uppermost layer that functions to transport the liquid to be tested to the next adjacent layer or layers. Such uppermost layer optionally includes a reagent for the test, for example, one or more enzymes operative upon the analyte of choice. The next adjacent layer or layers preferably include a matrix and binder and remaining reagents for the assay. These remaining reagents include those necessary to produce a detectable signal in increasing or decreasing amounts, e.g., a change in reflection density in response to the reaction of the analyte. Most preferably, such layers are formed to provide an integral element, within a support frame apertured to receive a liquid drop on the uppermost layer, as described, for example, in US—A—4169751. (The terms "upper", "lower" and similar directional terms are used herein with respect to orientations of parts during their actual use).

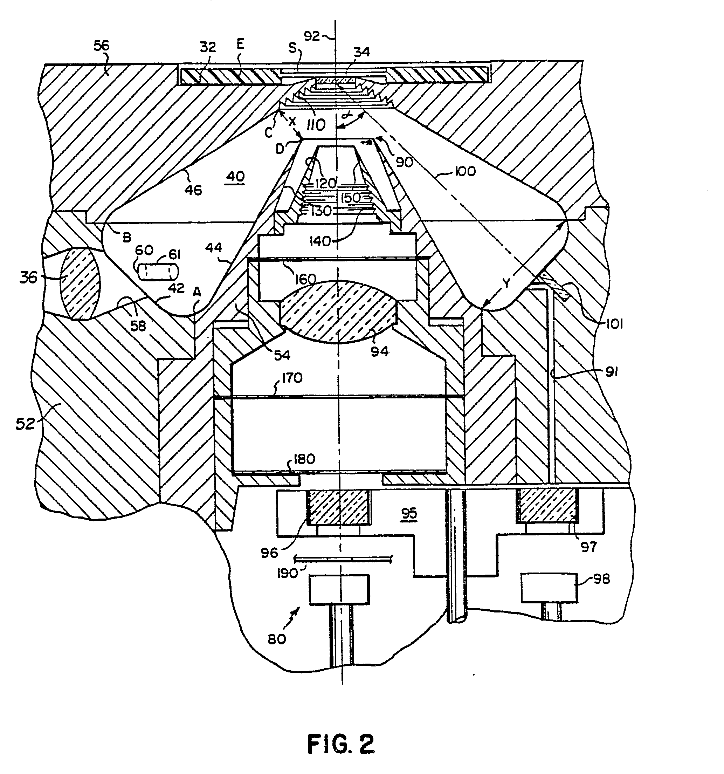

A reflectometer 10 constructed in accordance with the invention comprises, Fig. 1, a light source 20 which is preferably a pulsed source, a support surface 30 for a test element E to be read by the reflectometer, an integrating cavity 40 interposed between the light source 20 and the support surface 30, and detector means 80, Fig. 2, for detecting diffusely-reflected signals from the test element E. The detector means 80 is mounted centered within a cone 90 having an axis 92, and receives light reflected from test element E through a conventional lens 94 and a filter wheel 95 having matched interference filters 96 and 97 appropriate to the wavelength to be detected. A conventional reference detector 98 receives light through filter 97 that is received via passageway 91 and mirror 101, directly from the integrating cavity 40. Detector means 80 and reference detector 98 are preferably matched photodiodes of the smallest surface are possible without vignetting the signal imaged upon them. Suitable examples include, e.g., the photodiodes obtainable from Hamamatsu Corp. under the model No. SD1227-66BQ. Such photodiodes are preferred because they have a very short path between cover window and active area, along the optical axis.

For careful control of the filter wheel 95 for accurate repeated positioning of the filters 96 and 97, the wheel 95 is rotated by a stepper motor, not shown, using encoder holes on the wheel 95 to detect its position, as is conventional.

The pulsed source 20 can be selected from a variety of such sources, for example, a xenon arc lamp pulsed by a conventional charge storage circuit under the control of conventional computing means such as a microprocessor, not shown. Support surface 30 preferably comprises a recessed planar surface 32. Fig. 2, dimensioned to receive test element E, and a raised transparent viewing surface such as a sapphire member 34, raised to press against the viewable portion of test element E. Surface 32 is constructed to generally center the viewable portion of test element E on axis 92. Most preferably, such test element E is kept in position on surface 32 for the duration of its detection, since any displacement away from member 34 tends to distort the readings. The opposite, upper surface S of element E is the surface to which the analyte-containing liquid is added.

Member 34 can be omitted to leave just an aperture, although member 34 is preferred to keep dust and dirt from falling into cone 90.

A suitable conventional lens 36 is used to direct the light image from the pulsed source into cavity 40. An ellipsoidal reflector can also be used for higher energy efficiency.

In accord with one aspect of the present invention, cavity 40 is constructed to ensure delivery of increased amount of diffuse radiation to test element E, originating from light source 20. To this and the cavity comprises a diffusely reflecting surface 42, extending from point A to point B in the cavity, Fig. 2, and mirrored surfaces 44 and 46 extending from respective points A and B to points C and D. For manufacturing convenience, the surfaces 42, 44 and 46 are shown as being the surfaces of separately manufactured blocks 52, 54 and 56, respectively, that join together at points A and B. A reflective passageway 58 is formed in block 52 to mount lens 36 and to direct incoming radiation through an aperture 60 into the cavity 40 via an opening in surface 42. Passageway 58 preferably is aimed, using a shroud 61, at a spot 60', Fig. 1, on diffusely-reflecting surface 42, away from reflecting surface 44. That is, passageway 58 is not on an extension of a radius of the cone 90 as otherwise aperture 60 would be imaged on specularly-reflecting surface 44. The shroud is included to prevent light reflected from passageway 58 from reaching a surface 44 or 46. Such a preferred construction ensures that diffuse light, rather than a specularly-reflected direct image of the light source, is directed to the test element.

Surface 42 is positioned to extend about axis 92. Preferably, it is a surface of revolution, and most preferably, a truncated conic surface of revolution having an axis that is coincident with axis 92. Although surface 42 is shown as being generally flat (in axial cross-section) except at corners A and B which are rounded, it can also be generated by revolving a curve about axis 92. Regardless of the shape of surface 42, at least one ray of light reflected from every portion of surface 42 passes without striking any reflective or absorbing surface (hereinafter, passes "unimpeded") through the approximate middle of member 34 and to test element E. If member 34 is omitted, it passes through the approximate middle of the aperture. Such a ray defines the path of intended aligned illumination, shown in Fig. 2 as a dot-dash arrow 100, for its portion of surface 42. If flat, except for corners A and B, as shown, surface 42 is preferably inclined so that the path of aligned illumination is traced by light reflected from the surface along a normal to strike the plane of member 34 at 45°. The inclination of surface 42, when viewed in axial cross-section as shown, is also preferably at a 45° angle to the plane of support surface 32. However, such angle of surface 42 to the plane of surface 32 can vary from about 30° to about 60°. Thus it is not essential that the normal rays from surface 42 proceed unimpeded to the test element. If such normal rays are the unimpeded rays, then there is approximately an equal distribution of non-aligned rays, as hereinafter defined, into both the specularly-reflecting surfaces 44 and 46, providing best efficiencies. However, unequal distributions are also useful.

Regardless of the value of the angle that surface 42 makes with the plane of member 34, however, surface 42 is preferably shaped so that the rays along the path of aligned illumination form a cone of revolution. As noted, the intersection of the test element E by arrow 100 is at a preferred angle alpha (α) of about 45°. However, angle alpha can vary between the angular limits imposed by surfaces 44 and 46, which is preferably between about 30° and about 60°.

As shown, surfaces 44 and 46 converge on the approximate center of member 34. However, this is not critical. Alternatively, these surfaces can converge on the side edges, respectively, of member 34 so as to allow more of the diffusely-reflected rays to reach the test element E unimpeded.

Surface 42 is rendered diffusely reflective by any suitable technique, such as by the application of a flat white paint or a coating of pigments such as a coating of $BaSO_3$ or $TiO_2$ obtainable from Eastman Kodak under the brand name "Eastman White $TiO_2$".

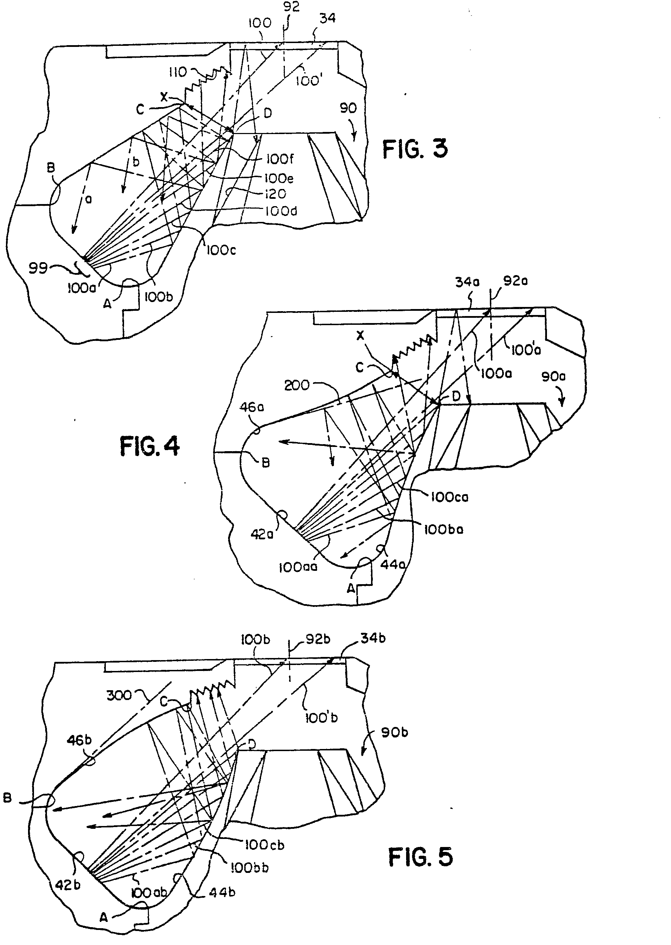

Because surface 42 is diffusely reflective, light is reflected therefrom in all directions, Fig. 3, and not just in the direction of arrow 100. To return back to surface 42 at least the majority of the light that does not pass through member 34 to strike the test element E, mirrored surfaces 44 and 46 are included, preferably contiguous with surface 42 at corners A and B. As used herein, "majority" means at least 50%. Any conventional specularly-reflecting surface, e.g., a mirror, suffices for such surfaces. As is readily apparent, surfaces 44 and 46 also comprise surfaces of revolution, and most preferably, conic surfaces.

An important aspect of cavity 40 is the configuration of surfaces 44 and 46 so that they reflect back to surface 42 the majority of non-aligned rays, that is, those reflected off surface 42 at an angle that deviates by more than about 5° from the intended path of aligned illumination. A configuration which is preferred for this effect is one in which surfaces 44 and 46 are convergent, that is, are closer together in the vicinity of the test element support provided by member 34, i.e., at points C and D, Fig. 2, than they are in the vicinity of surface 42, i.e., at points A and E. Thus, the distance "X", Fig. 2, is less than the distance "Y" (the distance from point A to point B).

As shown in Figs. 2 and 3, surfaces 44 and 46 are surfaces of revolution generated by a straight line (except at the edges identified by points A and B).

Most preferably, surfaces 42, 44 and 46 are complete surfaces of revolution extending 360° around axis 92. In addition, the integrating cavity can be constructed so that such surfaces extend less than 360°, e.g., 355°.

Some ray traces emanating from one left-hand portion 99 of surface 42 of the aforedescribed embodiment are shown in Fig. 3. (The right-hand portion of the cavity, not shown, can be considered to be identical). Trace 100 is normal to surface 42. Both traces 100 and 100' extend uninterrupted to member 34 and thus to test element E, wherein ray 100' is less than 5° from the corresponding normal ray 100. Rays 100a and 100b, which deviate by more than 5° from ray 100, bounce off surfaces 44, 46, 44 and 46, in that order, before returning to diffusely-reflecting surface 42. Ray 100c is reflected off surface 44 one additional time before it too returns.

Similarly, non-aligned rays emanating from other portions of surface 42 removed from center 99, are also reflected back. Most such other non-aligned rays also deviate about 5° from the corresponding aligned path before they strike a reflective surface 44 or 46. Thus it is clear that the convergence of surfaces 44 and 46 is effective to return to the diffusely-reflecting surface, most of the non-aligned rays, that is, those that deviate by more than about 5° from the corresponding unimpeded ray.

Similar ray traces can be drawn for other portions of surface 42.

The amount of convergence that occurs between the two mirrored surfaces 44 and 46 towards the support of the test element E is not critical, except that a trade-off does occur in the needed power versus the redirection of non-aligned rays that occurs. That is, as convergence increases, the more will non-aligned rays be immediately returned to diffuse surface 42 for re-reflection as an aligned ray. However, increased convergence requires a larger diffuse area for surface 42 for a given value of aperture opening "X" onto the test element E. As surface 42 incresaes in its linear separation dimension between the mirrored surfaces, the power lost in delivered brightness decreases approximately with the square of the linear increase.

As noted, surfaces 44 and 46 are shown as being inclined to the plane of member 34 at an angle of about 60° and about 30°, respectively. These angles are not critical, and in fact a greater convergence of surfaces 44 and 46 than is provided by this difference angle of about 30° tends to provide a more rapid return of non-aligned rays to surface 42, as already noted. However, if surface 44 is any steeper, i.e., is closer to 90°, less room is left for the light trap in cone 90 that is described hereinafter. If the difference between the angles for surfaces 44 and 46 is much more than about 30°, then the surface area for surface 42 is increased, with the concomitant decrease in power noted above.

It will be noted that special treatment is preferred for non-aligned rays 100d, 100e, and 100f. The reason is that rays 100d and 100e reflect off portions of the cavity, e.g., point D, that are so close to support member 34 that they could otherwise reflect into the detecting means 80 located at the bottom of cone 90, Fig. 2, without first encountering the test element. Ray 100f is objectionable because it provides undesired specular reflection from the test element (not shown) back into cone 90. For that reason, light traps are provided at surfaces 110, 120 and 130. Such trap surfaces can be ridged, as is preferred for surface 100, or smooth, such as is preferred for surfaces 120 and 130. (Surface 120 can also be varied slightly, as shown in Fig. 3). Most preferably they are painted with a flat black paint. Thus, rays 100d, e and f are terminated by the traps.

However, such rays constitute a very small percentage of the rays emanating from surface 42, and specifically, fall within a cone angle of only about 5°. This is a percentage of less than 5% of the 180° of possible diffuse reflection off surface 42, the remaining % of which proceeds directly to the test element as aligned rays, or is reflected back, as described, to surface 42 for re-emission. Thus, the reflectometer of the invention provides a recovery of the non-aligned rays that is on the order of 90%.

An additional light trap surface 140, Fig. 2, is provided on the inside suface 150 of cone 90 leading to lens 94. Additional light baffles 160, 170 and 180 are optionally included to ensure the elimination of light specularly reflected from the bottom surfaces of member 34 and test element E. Also an aperture 190 preferably is included to define the viewed area on the test element.

Because of the increased efficiency described above, effective reflection density results have been achieved using the described pulsed light source and a conventional microprocessor, not shown, to make needed, conventional calculations. The present invention provides increased energy efficiency while maintaining tight sample-to-reference channel balance and good signal-to-noise ratios across a range of reflection density $D_R$ values that includes 1.5 and across wavelengths as low as 340 nm.

Although one preferred shape of surfaces 44 and 46 which permits X to be less than Y is the one in which surfaces 44 and 46 are generated by a straight line, as shown in Figs. 2 and 3, other embodiments are also useful. Examples are shown in Figs. 4 and 5. Parts similar to those previously described bear the same reference numeral, to which the distinguishing suffixes "a" and "b" are affixed.

In Fig. 4, the integrating means comprise a diffusely-reflecting surface 42a as before, the normals to which (100a) form intended paths of illumination that proceed unimpeded to member 34a and thus to a test element thereupon, not shown. Light diffusely reflected from such element is detected via a detector, as in the previous embodiment, located centered on axis 92a inside cone 90a. Rays within 5° of ray 100a, such as ray 100'a, also proceed unimpeded to the test element.

Unlike the previous embodiment, surfaces 44a and 46a, although still surfaces of revolution centered on axis 92a, are each generated by a revolved line that is curved all the way from point A or B to point D or C, respectively. In this embodiment, such generating line is convexly curved, that is, generates a surface that diverges more from the opposite mirrored surface than would have been the case for a surface-generating line that was straight (dot-dashed line 200 in Fig. 4). Such a surface has the advantage of more immediate reflection of non-aligned rays back to surface 42a. That is, rays 100aa and 100ba strike each of surfaces 44a and 46a only once before returning, and ray 100ca is reflected a total of 3 times only, before returning. In each of these cases, this is two reflections less than was needed in the embodiment of Fig. 3. A disadvantage is that a larger surface 42a is needed, for the same value of X between C and D, which is less desirable for the power reasons noted above.

Similarly, in Fig. 5, the integrating means comprise a diffusely-reflecting surface 42b as before, the normals to which (100b) form intended paths of illumination that proceed unimpeded to member 34b and thus to a test element thereupon. Light diffusely reflected from such element is detected via a detector as in the previous embodiment. Rays within 5° of ray 100b, such as ray 100'b, also proceed unimpeded to the test element.

Unlike the previous embodiments, surfaces 44b and 46b, which are surfaces of revolution centered on axis 92b, are each generated by the revolution of a concavely curved line extending between B and C, and A and D, respectively. That is, the generating line converges more towards the opposite mirrored surface than would have been the case for a surface-generating line that was straight (line 300 in Fig. 5). Such a surface has the same advantage as the mirrored surfaces of Fig. 4—each non-aligned ray is specularly reflected two fewer times than the straight-line version of Fig. 3. See, e.g., the paths traced by rays 100ab, 100bb, and 100cb. However, cone 90b forms a sharper peak at edges D than was necessary in the previous embodiments, and is thus more difficult to manufacture.

It is not necessary that the generating line for the surfaces of revolution that provide the specular reflectance, e.g., surfaces 44 and 46, be a smooth curve. Other curve shapes are also useful, including lines with corners, provided that the distance X is less than the distance Y.

## Claims

1. A reflectometer comprising

means for supporting a generally planar test element in a predetermined location, said means comprising a transparent member or aperture permitting illumination of such a test element,

a light source,

integrating means optically disposed between said source and said predetermined location,

and detector means for detecting radiation diffusely reflected from a test element supported in said location, said detector means having an axis of detection extending to said predetermined location, characterized in that said integrating means comprise

a diffusely-reflecting surface positioned about said axis so that at least one ray of light reflected from a portion of said surface passes optically unimpeded to the approximate middle of said transparent member or aperture, thereby defining a path of aligned illumination for said surface portion,

and mirrored surfaces connected to opposite edges of said diffusely-reflecting surface and configured to reflect back to said diffusely-reflecting surface at least the majority of the non-aligned light that is diffusely reflected from said surface portion.

2. A reflectometer as defined in claim 1, wherein said mirrored surfaces are configured to reflect back at least 90% of said non-aligned light.

3. A reflectometer as defined in claim 1 or 2, wherein said mirrored surfaces are the inside and the outside surfaces of two truncated cones centered on said axis, and said diffusely-reflecting surface is a surface of revolution generally centered on said axis.

4. A reflectometer as defined in claim 3, wherein said cone surfaces are sloped so that they are closer together in the vicinity of said test element support location than they are in the vicinity of said diffusely-reflecting surface, whereby said non-aligned light is redirected back to said diffusely-reflecting surface.

5. A reflectometer as defined in any one of claims 1 to 4, wherein said diffusely-reflecting surface is a truncated conic surface and said unimpeded rays therefrom intersect a test element supported in said predetermined location at an angle that is between about 30° and about 60° to said supported test element.

6. A reflectometer as defined in any one of claims 1 to 5, wherein said rays along said intended path of aligned illumination form a cone.

7. A reflectometer as defined in any one of claims 1 to 6, wherin said mirrored surfaces are surfaces of revolution generated by a substantially straight line, so that said mirrored surfaces are substantially flat when viewed in axial cross-section.

8. A reflectometer as defined in any one of claims 1 to 6, wherein said mirrored surfaces are surfaces of revolution generated by a convexly curved line.

9. A reflectometer as defined in any one of claims 1 to 6, wherein said mirrored surfaces are surfaces of revolution generated by a concavely curved line.

10. A reflectometer as defined in any one of the preceding claims wherein said light source is pulsed.

**Patentansprüche**

1. Reflektometer mit Mitteln, die ein im allgemeinen planes Probenelement an einer vorbestimmten Stelle halten und ein durchsichtiges Teil oder eine Öffnung umfassen, durch die das Probenelement beleuchtet werden kann, sowie mit einer Lichtquelle, einem im optischen Strahlengang zwischen der Lichtquelle und der vorbestimmten Stelle angeordneten Intgegrationsmittel, und mit einem Detektor, der die von einem an der vorbestimmten Stelle gehaltenen Probenelement diffus reflektierte Strahlung feststellt und eine Achse besitzt, die sich zu der vorbestimmten Stelle hin erstreckt, dadurch gekennzeichnet, daß das Integrationsmittel eine diffus reflektierende Fläche umfaßt, die so um die Achse herum angeordnet ist, daß zumindest ein von einem Teil dieser Fläche reflektierter Lichtstrahl optisch ungehindert etwa bis zur Mitte des transparenten Teils oder der Öffnung gelangt und so ein gerichteter Lichtstrahl auf diesen Teil der Fläche gelenkt wird, und daß das Integrationsmittel verspiegelte Flächen besitzt, die mit einander gegenüberliegenden Kanten der diffus reflektierenden Fläche verbunden und so ausgebildet sind, daß mindestens der Hauptteil des vom Flächenteil diffus reflektierten, nicht gerichteten Lichts auf die diffus reflektierende Fläche zurückgeworfen wird.

2. Reflektometer nach Anspruch 1, dadurch gekennzeichnet, daß die verspiegelten Flächen mindestens 90% des nicht gerichteten Lichts zurückwerfen.

3. Reflektometer nach Anspruch 1 oder 2, dadurch gekennzeichnet, daß die verspiegelten Flächen die Innen- und die Außenseite zweier auf der Achse zentrierter Kegelstümpfe bilden und daß die diffus reflektierende Fläche ein im allgemeinen auf der Achse zentrierter Rotationskörper ist.

4. Reflektometer nach Anspruch 3, dadurch gekennzeichnet, daß die Flächen der Kegelstümpfe eine solche Neigung haben, daß die Flächen in der Nähe der Stelle, wo das Probenelement gehalten wird, näher beieinanderliegen als in der Nähe der diffus reflektierenden Fläche, so daß nicht gerichtetes Licht zu der diffus reflektierenden Fläche zurückgelenkt wird.

5. Reflektometer nach einem der Ansprüche 1 bis 4, dadurch gekennzeichnet, daß die diffus reflektierende Fläche kegelstumpfförmig ist und daß die von dieser Fläche ungehindert reflektierten Lichtstrahlen durch ein an der vorbestimmten Stelle gehaltenes Probenelement in einem Winkel zwischen etwa 30° und 40° fallen.

6. Reflektometer nach einem der Ansprüche 1 bis 5, dadurch gekennzeichnet, daß die Strahlen entlang des Strahlengangs des gerichteten Lichts einen Kegel bilden.

7. Reflektometer nach einem der Ansprüche 1 bis 6, dadurch gekennzeichnet, daß die verspiegelten Flächen aus Rotationskörpern bestehen, deren Erzeugende im wesentlichen durch eine Gerade gebildet sind, so daß die verspiegelten Flächen im axialen Querschnitt gesehen im wesentlichen flach sind.

8. Reflektometer nach einem der Ansprüche 1 bis 6, dadurch gekennzeichnet, daß die verspiegelten Fläche aus Rotationskörpern bestehen, deren Erzeugende durch eine konvex gekrümmte Linie gebildet sind.

9. Reflektometer nach einem der Ansprüche 1 bis 6, dadurch gekennzeichnet, daß die verspiegelten Flächen aus Rotationskörpern bestehen, deren Erzeugende durch eine konkav gekrümmte Linie gebildet sind.

10. Reflektometer nach einem der vorhergehenden Ansprüche, dadurch gekennzeichnet, daß die Lichtquelle gepulst ist.

## Revendications

1. Un réflectomètre comprenant:

des moyens pour supporter un organe de test généralement plan situé dans une zone prédéterminée, lesdits moyens comprenant un organe transparent ou une ouverture permettant l'éclairement de l'organe de test;

une source de lumière;

des moyens d'intégration disposés entre ladite source et ladite zone prédéterminée;

des moyens de détection pour détecter les radiations réfléchies d'une manière diffuse par un organe de test disposé dans ladite zone, lesdits moyens de détection définissant avec ladite zone prédéterminée un axe de détection;

ledit réflectomètre étant caractérisé en ce que lesdits moyens d'intégration comprennent:

une surface réflectrice diffusante, positionnée autour dudit axe afin que, au moins un pinceau de lumière réfléchi par une partie de ladite surface diffusante parvienne directement, c'est-à-dire, sans être optiquement dévié, à peu près au milieu dudit organe transparent ou de l'ouverture, définissant ainsi un trajet d'éclairement direct pour la partie de ladite surface, et;

des surfaces réflectrices spéculaires, c'est-à-dire formant miroirs, connectées aux bords opposés de ladite surface diffusante, et conçues de façon à renvoyer sur ladite surface diffusante au moins la majeure partie de la lumière réfléchie d'une manière diffuse par la surface diffusante et n'atteignant pas directement ladite zone prédéterminée.

2. Un réflectomètre selon la revendication 1 dans lequel lesdites surfaces réflectrices spéculaires sont conçues de façon à réfléchir au moins 90% de la lumière n'atteignant pas directement ladite zone prédéterminée.

3. Un réflectomètre selon la revendication 1, dans lequel lesdites surfaces réflectrices spéculaires constituent les surfaces internes et externes de deux cônes tronqués et centrés sur ledit axe, et dans lequel ladite surface réflectrice diffusante est une surface de révolution généralement centrée sur ledit axe.

4. Un réflectomètre selon la revendication 3, dans lequel les surfaces desdits cônes sont inclinées de façon à être plus proches l'une de l'autre au voisinage de la zone où est situé l'organe de test qu'elles ne le sont au voisinage de la surface réflectrice diffusante, permettant ainsi à la lumière n'attiegnant pas directement ladite zone prédéterminée d'être renvoyée sur ladite surface réflectrice diffusante.

5. Un réflectomètre selon l'une quelconque des revendications 1 à 4, dans lequel ladite surface diffusante constitue une surface conique tronquée et dans lequel lesdits pinceaux atteignant directement la zone prédéterminée et provenant de ladite surface diffusante, rencontrent un organe de test disposé dans une zone prédéterminée selon un angle d'environ 30° à 60° par rapport audit organe de test.

6. Un réflectomètre selon l'une quelconque des revendications 1 à 5, dans lequel lesdits pinceaux, le long dudit axe de lumière atteignant directement la zone prédéterminée, forment un cône.

7. Un réflectomètre selon l'une quelconque des revendications 1 à 6, dans lequel lesdites surfaces réflectrices spéculaires sont des surfaces de révolution générées par une ligne sensiblement droite de façon à ce que lesdites surfaces réflectrices spéculaires soient sensiblement planes lorsqu'elles sont vues en coupe.

8. Un réflectomètre selon l'une quelconque des revendications 1 à 6, dans lequel lesdites surfaces réflectrices spéculaires sont des surfaces de révolution générées par une courbe convexe.

9. Un réflectomètre selon l'une quelconque des revendications 1 à 6, dans lequel les surfaces réflectrices spéculaires sont des surfaces de révolution générées par une courbe concave.

10. Un réflectomètre selon l'une quelconque des revendications précédentes, dans lequel ladite source de lumière est à impulsions.

FIG. I

EP 0 174 186 B1

EP 0 174 186 B1

FIG. 2

FIG. 3

FIG. 4

FIG. 5